# EUROPEAN PATENT SPECIFICATION

(11) **EP 1 131 898 B1**
(45) Date of publication and mention of the grant of the patent: **02.10.2002**
(21) Application number: 99965401.5
(22) Date of filing: 17.11.1999
(51) Int. Cl.: H04B 1/38, H01Q 1/24

(54) **CELLULAR PHONE, FLIP, AND HINGE**
ZELLULARTELEFON MIT KLAPPE UND SCHARNIER
TELEPHONE CELLULAIRE, COUVERCLE RABATTABLE, ET ARTICULATION

(30) Priority: 18.11.1998 JP 32789098
(43) Date of publication of application: 12.09.2001
(73) Proprietor: TELEFONAKTIEBOLAGET LM ERICSSON, 126 25 Stockholm (SE)
(72) Inventor: SAKUMA, Masao, Yokohoma, Kanagawa (JP); NAKAMURA, Shinji, Kamakura, Kanagawa (JP); FUKUDA, Takayasu, Kawasaki, Kanagawa (JP)
(74) Representative: Cheyne, John Robert Alexander Mackenzie
(86) International application number: EP9908819
(87) International publication number: WO00030267

(56) References cited:
- EP-A- 0 508 567
- US-A- 5 170 173
- US-A- 5 649 306

## Description

This patent application claims priority based on a Japanese laid open patent application, 2000-165124 published on June 16, 2000.

### BACKGROUND OF THE INVENTION

### 1. Field of the Invention

The present invention generally relates to a wireless communication apparatus such as a cellular phone, a flip for such a wireless communication apparatus, and a hinge for connecting the hinge to the main body of the wireless communication apparatus. In particular, the present invention relates to a cellular phone having an antenna in the flip.

### 2. Description of the Related Art

Is has been proposed to provide a diversity antenna for exclusive use in signal receiving to a cellular phone, other than the main antenna attached to the main body of the cellular phone. In the conventional art, the diversity antenna is generally built in the main body of the cellular phone.

In one example, US 5,649,306, 'a radio communication device is disclosed with two antennas, one in each housing element of the device. It provides a switch which is operable to switch between the two antennas in response to the position of one housing element relative to the other.

In another example, US 5,170,173, a communication device is disclosed with a hinged element. Coupling is achieved over the hinge by parallel plate capacitors. These capacitors additionally act as a matching network for the antenna.

In another example, Japanese Patent Application Laid-open No. 7-46014 discloses a cellular phone which has a second antenna fixed to the main body of the cellular phone, other than the whip antenna. Various antenna configurations and associated techniques are also disclosed in US Patents Nos. 4,471,493, 4,939,792, 5,014,346, 5,073,761, 5,170,173, 5,337,061, 5,508,709, 5,554,996, 5,561,437, 5,572,223, and 5,579,023.

If the cellular phone is made compact, the distance between the main antenna and the built-in diversity antenna decreases, and the effect of the space diversity is reduced. To overcome this problem, some cellular phones have their diversity antennas built into the flips. The flips generally have a metal part as an ornament or decoration. Such a metal part is formed by, for example, vacuum evaporation. The performance of the diversity antenna built in the flip is very sensitive to the properties of the metal part. In addition, the metal part of the flip also adversely affects the performance of the main antenna.

### SUMMARY OF THE INVENTION

Therefore, it is an object of the present invention to overcome these drawbacks in the related art, and to provide a cellular phone which has a sufficient distance between the main antenna and the diversity antenna, to avoid deterioration of the performance of the main antenna. This object is achieved by combinations described in the independent claims. The dependent claims define further advantageous and exemplary combinations of the present invention.

In one aspect of the invention, a cellular phone which comprises a main body, a flip connected to the main body in a pivotable manner, a first antenna attached to the main body, a second antenna built into the flip, and a signal transfer unit for transferring a radio signal received by the second antenna to the main body, is provided. The flip is pivotable between an open position and a closed position where the flip is folded towards the main body of the cellular phone.

The flip has an inner face and an outer face in the state where the flip is closed toward the main body, and the-second antenna is formed, for example, on the outer face of the flip. When the flip is opened, the center of mass of the second antenna is located further from the main body than the center of the flip. The second antenna is, for example, a plane antenna. The second antenna is formed by, for example, vacuum evaporation , plating, or adhering a metal plate onto the flip. The flip may have a coupling antenna on the inner face, and the radio signal is transferred from the second antenna to the coupling antenna by capacitive coupling. In this case, the coupling antenna is formed on the inner face of the flip at a position corresponding to the second antenna formed on the outer face of the flip.

The coupling antenna is formed on the flip by, for example, by vacuum evaporation , plating, or adhering a metal plate onto the flip. The flip may have a resonator element which resonates with the second antenna. In this case, the signal transfer unit has one or more hinges for connecting the flip to the main body of the cellular phone in a pivotable manner. Each hinge comprises a shaft and a transmission line for connecting the resonator element to the ground of the main body of the cellular phone. The resonator element is provided to, for example, the inner face of the flip, and preferably, the resonator element is provided to the inner face of the flip in an area other than the region corresponding to the second antenna formed on the outer face of the flip.

If the signal transfer unit has one or more hinges for connecting the flip to the main body of the cellular phone in a pivotable manner, each hinge preferably has a shaft so that the radio signal is transferred from the second antenna to the main body of the cellular phone via the shaft of each hinge. In this case, the hinge has a pipe surrounding the shaft, and the radio signal is transferred from the second antenna to the main body via the shaft and the pipe of the hinge, based on the capacitive coupling between the shaft and the pipe. Each hinge may further have a brush which is rotatable about the shaft. In this configuration, the flip preferably has a microphone, and a combiner for combining the outputs from the second antenna and the microphone into a single signal line. The single signal line is transferred to the main body of the cellular phone via the shaft and the brush of the hinge.

Preferably, the combiner has a first coil inserted in series between the microphone and the shaft, a second coil inserted in series between the microphone and the reference voltage of the cellular phone. The cellular phone may further comprise a receiving circuit for demodulating the radio signal, and a switch circuit for switching over the input to the receiving circuit between first and second antennas so as to allow only one of the radio signals received at the first and second antennas to be supplied to the receiving circuit.

Preferably, the cellular phone has a field-strength meter for measuring the intensity of the electric field of the received signal. It is determined if the flip is closed or opened based on the detected intensity of the electric field. In this case, the cellular phone changes into the off-hook state if the intensity detector detects a predetermined level of electric field. The cellular phone may further comprise an LCD display and a back light for the LCD display. The back light is turned on if the intensity detector detects a predetermined'level of electric field.

In another aspect of the invention, a hinge for connecting a first object to a second object in a pivotable manner is provided. This hinge comprises a shaft connected to the first object, and a pipe surrounding the shaft so as to be rotatable about the shaft, the pipe being connected to the second object. An alternating signal is transferred between the shaft and the pipe by capacitive coupling generated between the shaft and the pipe. The hinge comprises a shaft connected tc the first object, and a connector connected to the second object, which contacts with the shaft in such a way as to allow a sliding movement.

In still another aspect of the invention, a flip is provided. The flip comprises a connector for connecting the flip to a main body of a cellular phone in a pivotable manner, a metal plate, and a signal line connected to the metal plate and extending to the connector. The flip has an inner face and an outer face in the state where the flip is closed toward the main body of the cellular phone, and a metal plate is provided on the outer face of the flip. Preferably, the center of mass of the metal plate is located further from the connector than the center of the flip.

The metal plate is formed directly onto the flip by vacuum evaporation or plating, or by adhering a separate metal plate onto the flip. Preferably, the flip further comprises a coupling metal plate on its inner face, and a radio signal is transferred from the metal plate to the coupling metal plate by capacitive coupling. The flip also comprises a resonator element that resonates with the metal plate. In this case, the resonator element is preferably provided to the inner face of the flip.

The resonator element is provided, for example, in an area other than the region corresponding to the metal plate- provided onto the outer face of the flip. The flip may have a microphone, and a combiner for combining the outputs from the metal plate and the microphone into a single signal line. In this case, the combiner has a first coil inserted in series between the microphone and the shaft cf the connector, a second coil inserted in series between the microphone and the reference voltage of the cellular phone.

This summary of the invention does not necessarily describe all essential features. The invention may also be a subcombination of these described features.

### BRIEF DESCRIPTION OF THE DRAWINGS

The above and other objects and features of the invention will become more apparent from the following detailed description of the preferred embodiments with reference to the attached drawings, wherein:
Fig. 1 illustrates the cellular phone according to an embodiment of the invention. Fig. 1A is a front view, and Fig. 1B is a side view of the cellular phone;
Fig. 2 illustrates the flip of the cellular phone shown in Fig. 1;
Fig 3 schematically illustrates an example of the antenna circuit of the flip shown in Fig. 2;
Fig. 4 illustrates another example of the antenna circuit of the flip;
Fig. 5 illustrates the hinge of the cellular phone shown in Fig. 1;
Fig. 6 illustrates a modification of the hinge shown in Fig. 5;
Fig. 7 is a block diagram of the cellular phone shown in Fig. 1;
Fig. 8 is a circuit diagram showing the signal composition unit, the microphone filter, and the peripheral circuit thereof;
Fig. 9 illustrates the directivity of the antenna within a horizontal plane of the cellular phone shown in Fig. 1;
Fig. 10 illustrates the directivity of the antenna within the first vertical plane of the cellular phone shown in Fig. 1;
Fig. 11 illustrates the directivity of the antenna within the second vertical plane of the cellular phone shown in Fig. 1; and
Fig. 12 illustrates the directivity of the antenna measured with the flip shown in Fig. 11 closed.

### DETAILED DESCRIPTION OF THE PREFERRED EMBODIMENTS

The invention will now be described based on the preferred embodiments, which do not intend to limit the invention, but exemplify the invention. All of the features and the combinations thereof described in the embodiment are not necessarily essential to the invention.

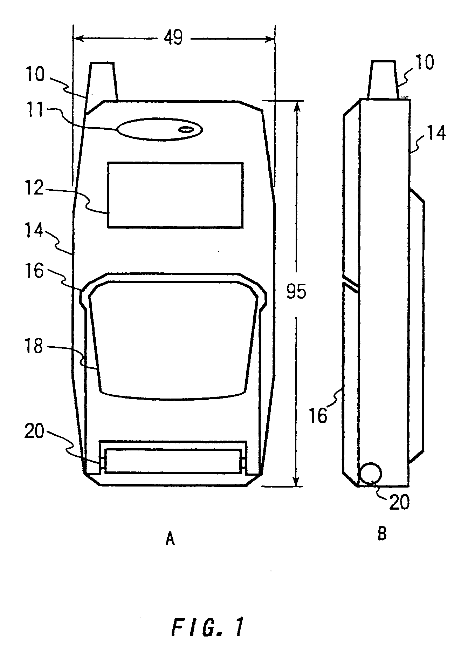

Fig. 1 illustrates a cellular phone according to an embodiment of the invention. Fig. 1A is a front view, and Fig. 1B is a side view of the cellular phone. The cellular phone has a main body 14, a flip 16, and a hinge 20 which connects the flip 16 to the main body 14 in a pivotable manner. The main body 14 has a first antenna 10, a speaker 11, and an LCD 12. When the flip 16 is closed toward the main body, it has an inner face and an outer face. A plane antenna (i.e., a second antenna) 18 is formed on the outer face of the flip 16 by vacuum evaporation or plating. The second antenna 18 may function as an ornament of the flip. As an alternative, the second antenna may be formed by adhering a metal plate having a predetermined size and shape onto the flip. Since the first antenna 10 is provided to the main body 14, a sufficient distance can be provided between the first and second antennas when the flip 16 is open. Thus, even if the cellular phone itself is compact in size, a sufficient diversity gain can be obtained based on the positional effect.

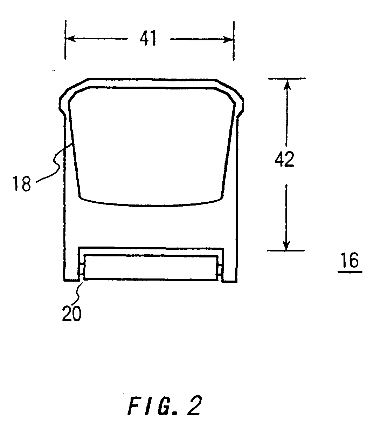

Fig. 2 illustrates the flip 16 with specific dimensions. The width of the flip 16 is approximately 41mm and the length is approximately 42mm. The second antenna 18 is formed on the flip 18 by, for example, vacuum evaporation. In order to increase the radiation efficiency of the antenna, the width of the second antenna 18 is preferably 80% or more of the width of the flip 16. The length of the second antenna 18 is preferably 50% or more of the length of the flip 16.

The center of mass of the second antenna 18 is located further from the hinge 20 than the center point of the flip 16. Accordingly, when the flip 16 is open, the center of mass of the second antenna 18 is further from the main body 14 than the center point of the flip 16. This arrangement allows the radio wave to easily resonate between the main body 14 and the second antenna 18, and at the same time, the space diversity effect can be enhanced when a radio signal is received by the first and second antenna 10 and 18 with a diversity reception technique.

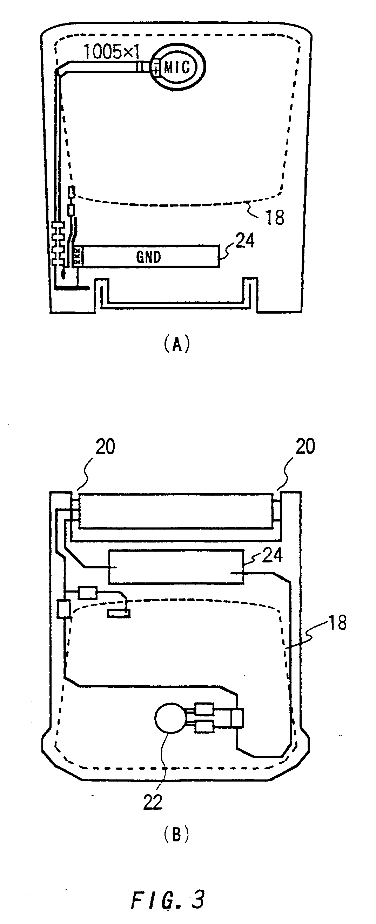

Fig. 3 illustrates the inner face (or the rear face) of the flip 16, and in particular, Fig. 3B shows the electrical connection of the flip 16. The hinge 20 functions as a connector between the flip 16 and the main body 14. The second antenna 18, which is indicated by the dashed lines in Fig. 3, is connected to the hinge 20 via a signal line. The flip 16 has a microphone 22, and the output from the microphone 22 is combined with the output from the second antenna 18 in the flip 16.

The rear face (or the inner face) of the flip 16 is provided with a resonator element which resonates with the antenna 18. Because the dimensions of the antenna 18, which is formed on the outer face of the flip 16, are not freely changeable for reasons of design, the dimensions of the resonator element 24, as well as its radiation impedance and radiation pattern, are adjusted in order to obtain the optimal radiation efficiency and receiving efficiency at a desired frequency band.

It is preferable for the resonator element 24 and the antenna 18 to be separated as much as possible. To decrease the capacitive coupling between the resonator element 24 and the antenna 18, the resonator element 24 is preferably located at a position other than a position corresponding to the second antenna formed on the outer face of the flip 16.

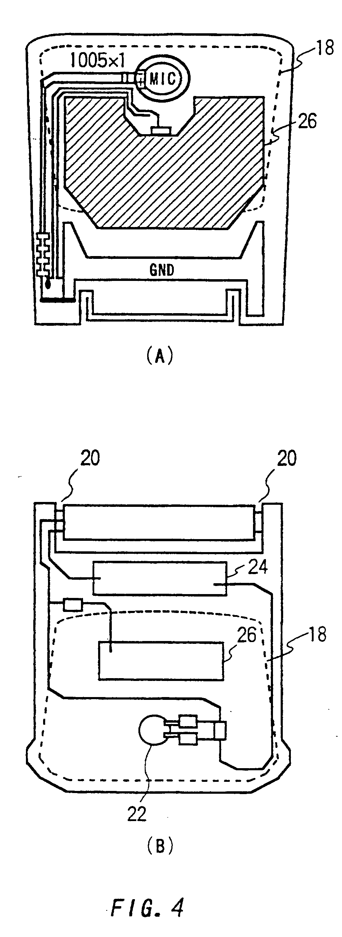

Fig. 4 illustrates another example of the configuration of the flip 16. In the example shown in Fig. 3, the antenna 18 is connected to the main body 14 of the cellular phone by a signal line that is soldered directly to the antenna 18. However, if the signal line is soldered directly to the antenna 18, the outer surface of the flip is likely to be uneven at the signal-connection areas due to the connection terminals. To eliminate the unevenness, a coupling antenna 26 is provided to the inner face of the flip 16 in the example shown in Fig. 4. The coupling antenna 26 is positioned in the region corresponding to the antenna 18 on the outer face, and the signal line is connected to the coupling antenna 26, in order that the unevenness on the outer surface can be avoided.

In this case, the radio signal is transferred from the antenna 18 to the coupling-antenna 26 by capacitive coupling, and is further transferred to the signal line. The coupling antenna is formed on the flip by at least one method of vacuum evaporation, plating, and adhering a metal plane on to the flip.

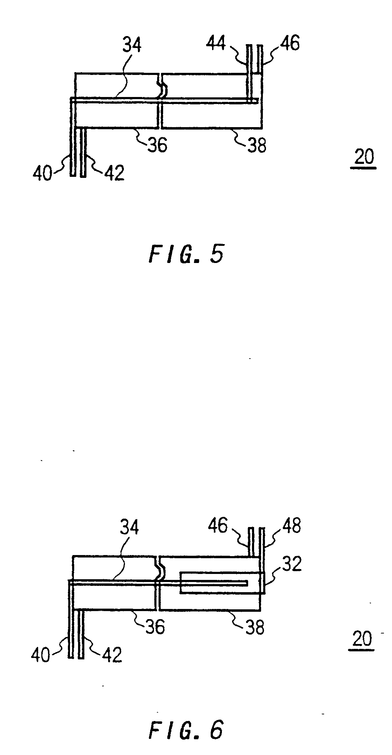

Fig. 5 illustrates the hinge 20 shown in Fig. 1. One or more hinges 20 are attached between the flip 16 and the main body 14 of the cellular phone. Each hinge 20 connects the flip 16 to the main body 14 in a pivotable manner. The hinge 20 has a first signal line 40, which is connected to the antenna 18, and a second signal line (or a ground cable) 42, which is connected to the resonator element 24. The hinge 20 also has a shaft 34, to which the first signal line 40 is connected, and a brush 44 which is in contact with the shaft 34 in such a way to allow sliding movement of the brush 44.

The second signal line 42 is connected to a hinge element 36 surrounding the shaft 34. The hinge element 36 is in contact with the second hinge element 38 in such a way to allow sliding movement. On the side of the main body 14, the ground cable (i.e., the second signal line) 46 is connected to the second hinge element 38, and the brush 44 is connected to the receiving circuit of the main body 14. Accordingly, both the antenna 18 and the resonator element 24 are connected to the main body 14 by a single hinge 20.

As an alternative, the antenna 18 may be connected to the main body 14 by the hinge elements 36 and 38, while the resonator element 24 is connected to the main body 14 via the shaft 34. As another modification, the antenna 18 may be connected to the main body 14 by the shaft 34 of one hinge 20, and the resonator element 24 may be connected to the main body 14 by the shaft 34 of another hinge 20. As still another alternative, the antenna 18 may be connected to the main body 14 by the hinge elements 36 and 38 of one hinge 20, while the resonator element 24 may be connected to the main body 14 by the hinge elements 36 and 38 of another hinge 20. As yet another alternative, the antenna 18 may be connected to the brush 44, and the receiving circuit of the main body 14 may be connected to the shaft 34, with which the brush 44 contacts in a manner that permits a sliding movement.

Fig. 6 illustrates a hinge 20 according to another embodiment of the invention. The hinge 20 of this embodiment has a pipe 32 surrounding the shaft 34, in addition to the elements shown in Fig. 5. The signal line 48 of the main body 14 is connected to the pipe 32, instead of being connected to the shaft 34. The pipe 32 is rotatable about the shaft 34, and a radio signal is transferred from the shaft 34 to the pipe 32 by capacitive coupling generated between the shaft 34 and the pipe 32.

In this embodiment, a radio signal is transferred from the antenna 18 to the main body 14 via a transmission line having an impedance of 50Ω. In a frequency band from 800MHz to 1000MHz, for example, capacitive coupling of approximately 100pF between the shaft 34 and the pipe 32 is sufficient. By adjusting the length of the pipe 32, the capacitive coupling can be appropriately varied even if the frequency of the radio signal changes. Thus, optimum capacitance is easily generated for a desired frequency.

However, since the frequency of the signal from the microphone 22 is low, it is difficult to transfer the microphone signal to the main body 14 via the shaft 34. Therefore, a separate signal line is added for the purpose of transferring the microphone signal in this embodiment, or alternatively, at least one of the two hinges 20 is designed as shown in Fig. 5, and the antenna signal is transferred to the main body 14 via the shaft 34 of the hinge 20.

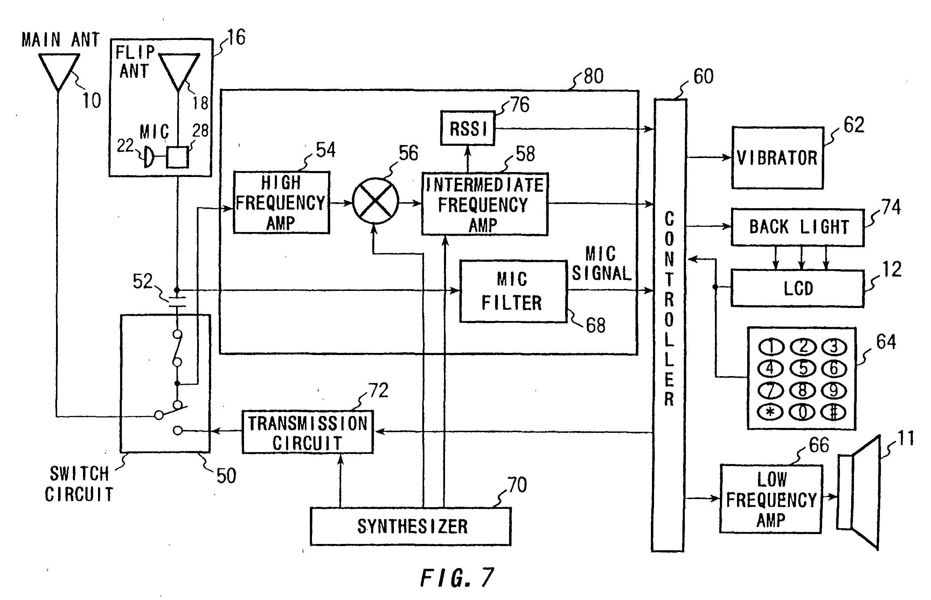

Fig. 7 is a block diagram of the circuit of the cellular phone shown in Fig. 1. A controller 60 controls the overall operations of the cellular phone. A receiving circuit 80 demodulates a radio signal, and supplies the demodulated radio signal to the controller 60. A switch circuit 50 switches the inputs from the first and second antennas 10 and 18 so as to supply only one of the radio signals received by these two antennas to the receiving circuit 80. A transmission circuit 72 modulates the transmission signal output from the controller 60. A synthesizer 70 supplies signals for demodulation and modulation to the receiving circuit 80 and the transmission circuit 72, respectively.

A back light 74 illuminates the LCD 12 based on a control signal supplied from the controller 60. A vibrator 62 informs the user of a call received by the cellular phone. The user can operate the cellular phone through a key pad 64. An amplifier 66 amplifies a voice signal output from the controller 60, and the amplified voice signal is output from a speaker 11. The flip 16 has a combiner 28 which combines the output from the microphone 22 and the output from the antenna 18 into a single signal line. The signal line extends from the combiner 28 to the main body 14.

The receiving circuit 80 comprises a capacitor 52 for blocking a direct current, a radio frequency amplifier 54 for amplifying the received signal, a mixer 56 for demodulating the amplified signal, an intermediate frequency amplifier 58 for amplifying the demodulated signal again, a field-strength meter (RSSI) 76 for measuring the intensity of the electric field of the received signal, and a mike filter 68 for extracting a signal component of a voice frequency band from the received signal. If the field-strength meter 76 detects a predetermined intensity of electric field, the controller 60 determines that the flip 16 is opened. If the field-strength meter 76 detects another predetermined level of electric field while the cellular phone is receiving a call, the controller 60 changes the cellular phone to the off-hook state. If the field-strength meter 76 detects. the said predetermined level of electric field without any external calls, the controller 60 determines that a call-out action is to be taken, and causes the back light 74 for the LCD 12 to be turned on.

The predetermined value used to determine the opening of the flip 16 is, for example, the maximum receiving intensity with the flip 16 closed plus a margin. Alternatively, the intensity of the received electric field is continuously monitored by the field-strength meter 76, and if the direct-current voltage output from the field-strength meter 76 abruptly increases, it is determined that the flip 16 has been opened. The opening of the flip 16 may be determined based on both an abrupt increase in the intensity of the detected field, and the exceeding of the predetermined threshold value. With either method, the opening of the flip 16 can be detected without using a mechanical switch. This allows the cellular phone to be made compact in size at a low cost, while the probability of failure or breakdown can be decreased.

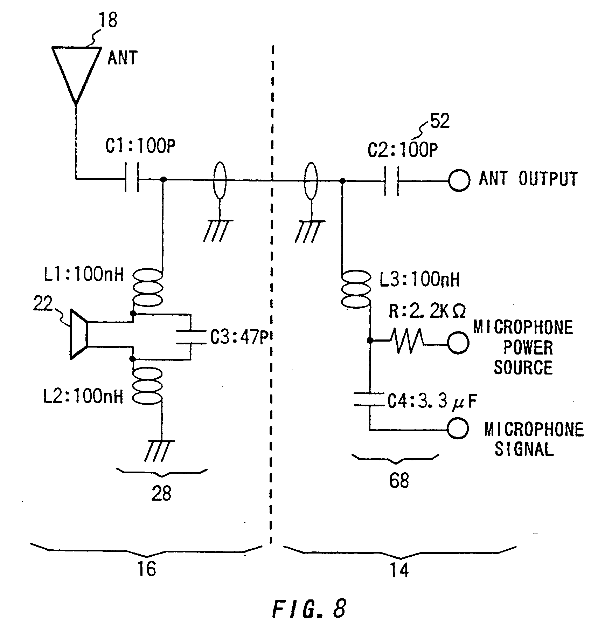

Fig. 8 is a circuit diagram of the combiner 28, the mike filter 68, and other peripheral elements shown in Fig. 7. The combiner 28 has a coil L1 inserted in series between the microphone 22 and the signal line of the antenna 18, and a coil L2 inserted in series between the reference voltage (such as a ground voltage of the cellular phone) and the microphone 22. The combiner 28 also has a capacitor C3 of 47pF for connecting the microphone-side terminals of the coils L1 and L2 in parallel, and a capacitor C1 inserted on the line of the antenna 18 on the input side of the combiner 28. Because the combiner 28 blocks the radio frequency component between the microphone 22 and the antenna 18, this arrangement can prevent the performance of the antenna 18 from deteriorating due to the microphone 22.

The mike filter 68 has a coil L3 inserted in series in the signal line of the antenna 18, a resistor R of 2.2KΩ inserted in series between the output of the coil L3 and the power source of the microphone, a capacitor C4 of 3.3µF inserted in series between the output of the coil L3 and the output of the microphone 22, and a capacitor C2 inserted on the line of the antenna 18 at a position closer to the main body than the connection point of the mike filter 68. The direct-current voltage supplied from the power source of the microphone is blocked by the capacitors C1 and C2, and then supplied to the microphone 22 via the coils L1 and L3.

The mike signal generated by the microphone 22 is superimposed on the signal received from the antenna 18. Accordingly, the number of signal lines between the flip 16 and the main body 14 can be reduced. The mike filter 68 allows only the signal component of the voice frequency band to be extracted as a mike signal at the output terminal of the capacitor C4. In addition, because the mike filter 68 blocks the radio frequency component at the coil L3 positioned between the mike output and the antenna output, mutual influence of the antenna output and the mike output, that is, deterioration of the antenna performance due to the mike output, and deterioration of the mike output due to the antenna output, can be prevented.

It is desirable that the capacitance of the capacitors C1 and C2 is set so as not to affect the impedance and attenuation of the signal at the receiving band. For this reason, the capacitance of C1 and C2 is set to 100pF in this embodiment. The inductance of the coils L1 through L3 is set to a constant value that does not affect the mike signal, the impedance, or the attenuation of the signal significantly, and it is set to 100nH in this embodiment. The coils L1 through L3 can prevent the radio frequency component of the antenna signal from flowing into the signal path to the microphone 22. In particular, the coil L2 inserted between the microphone 22 and the ground can effectively prevent the radio signal component superimposed on the ground from flowing into the microphone side.

### <Examples>

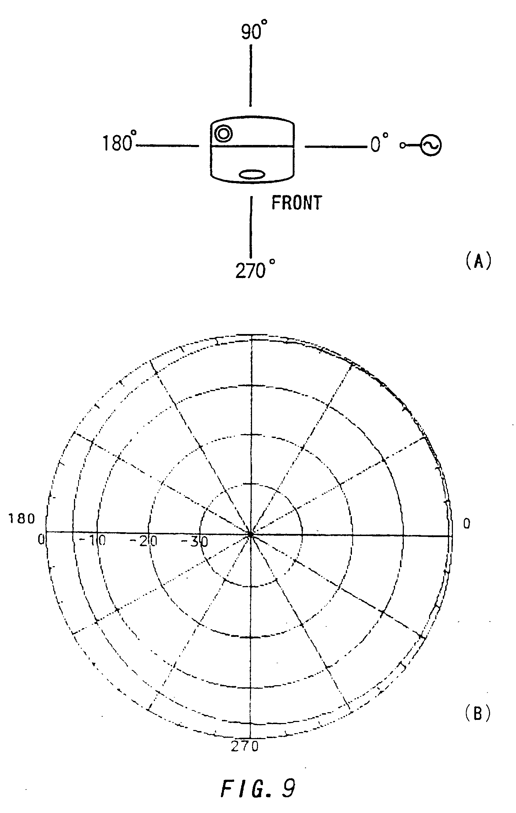

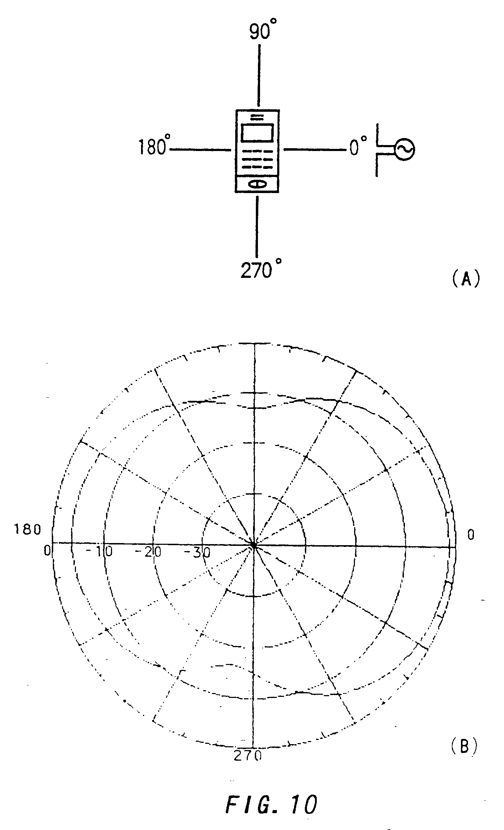

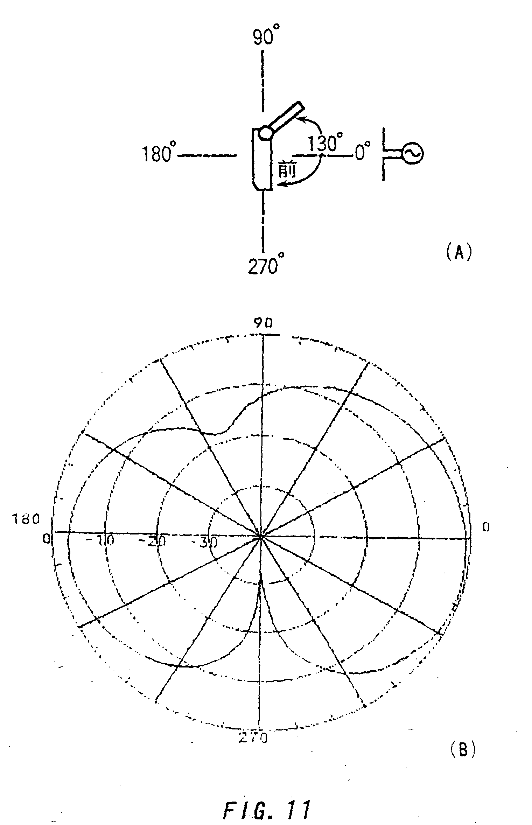

Fig. 9A, 10A,and 11A are the top views of the cellular phone set in various postures, and Figs. 9B, 10B, and 11B are the diagrams showing the antenna directivities of the cellular phone shown in Figs. 1 and 2 at the corresponding postures. The frequency was set to 885MHz, and the standard antenna level was set to -45.1dBm in all measurements. In Fig. 9, the cellular phone was stood vertically (as shown in Fig. 9A), and its directivity was measured for 360 degrees around the cellular phone. In Fig. 10, the cellular phone was laid horizontally (as. shown in Fig. 10A), and the directivity of the cellular phone was measured in a plane covering the left, right, above and below. In Fig. 11, the cellular phone was placed sideways (as shown in Fig. 11A), and the directivity was measured in a plane covering the front, back, above and below.

The following is the data obtained by the measurement.

| 1. Within a horizontal plane (Fig. 9) | | | |
|---|---|---|---|
| Antenna Gain: -0.4dBd | | | |
| Average Gain: -2.5dBd | | | |

| angle | relative level (dB) | angle | relative level (dB) |
|---|---|---|---|
| 0 | -0.77 | 180 | -5.31 |
| 10 | -0.62 | 190 | -5.43 |
| 20 | -0.45 | 200 | -5.44 |
| 30 | -0.37 | 210 | -5.30 |
| 40 | -0.35 | 220 | -4.97 |
| 50 | -0.37 | 230 | -4.61 |
| 60 | -0.44 | 240 | -4.18 |
| 70 | -0.59 | 250 | -3.74 |
| 80 | -0.81 | 260 | -3.30 |
| 90 | -1.08 | 270 | -2.92 |
| 100 | -1.45 | 280 | -2.52 |
| 110 | -2.03 | 290 | -2.20 |
| 120 | -2.73 | 300 | -1.88 |
| 130 | -3.21 | 310 | -1.66 |
| 140 | -3.74 | 320 | -1.40 |
| 150 | -4.24 | 330 | -1.17 |
| 160 | -4.67 | 340 | -1.02 |
| 170 | -5.02 | 350 | -0.87 |

| 2. Within a vertical plane (Fig. 10) | | | |
|---|---|---|---|
| Antenna Gain: -1.3dBd | | | |
| Average Gain: -6.9dBd | | | |

| angle | relative level (dB) | angle | relative level (dB) |
|---|---|---|---|
| 0 | -1.31 | 180 | -3.77 |
| 10 | -1.47 | 190 | -4.19 |
| 20 | -1.89 | 200 | -5.15 |
| 30 | -2.65 | 210 | -6.17 |
| 40 | -3.78 | 220 | -7.55 |
| 50 | -5.25 | 230 | -9.40 |
| 60 | -7.06 | 240 | -11.80 |
| 70 | -9.27 | 250 | -14.42 |
| 80 | -11.77 | 260 | -16.36 |
| 90 | -13.01 | 270 | -15.00 |
| 100 | -11.77 | 280 | -12.08 |
| 110 | -9.89 | 290 | -9.29 |
| 120 | -8.11 | 300 | -6.62 |
| 130 | -6.57 | 310 | -4.70 |
| 140 | -5.51 | 320 | -3.26 |
| 150 | -4.63 | 330 | -2.26 |
| 160 | -4.05 | 340 | -1.62 |
| 170 | -3.78 | 350 | -1.38 |

As is exhibited by the above-listed measurement data and the graphs shown in Figs. 9 to 11, the directivity of the antenna according to the invention is uniform in a horizontal plane, and the directivity is broad in a vertical plane.

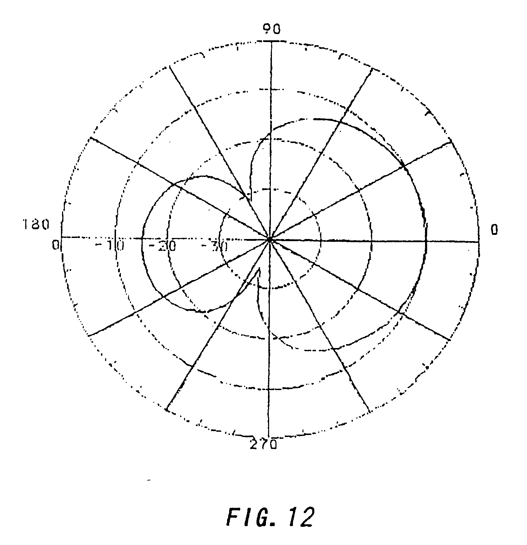

Fig. 12 shows the directivity of the antenna measured with the cellular phone placed sideways, as in Fig. 11, and with the flip closed. As compared with Fig. 11, the gain decreases in all directions because the flip is closed. Since the intensity of the electric field changes each time the flip is closed or opened, the opening and closing of the flip can be detected based on the detected intensity of the electric field.

As has been described, a cellular phone and a flip with an antenna, which is suitable for the cellular phone, are provided.

Although the present invention has been described by way of exemplary embodiments, it should be understood that many changes and substitutions may be made by those skilled in the art without departing from the scope of the invention which is defined only by the appended claims.

For example, this invention can also be applied to a portable computer having a flip, or other similar products. Such products are also included in the technical scope of the present invention.

## Claims

1. A flip (16) of a cellular phone, comprising:
a connector (20) for connecting the flip (16) to a main body (14) of the cellular phone in a pivotable manner;
a plane antenna (18) for receiving a radio signal;
a microphone (22); and
a combiner (28) for combining outputs from the plane antenna (13) and the microphone (22) into a single signal line that extends to the connector (20).

2. The flip (16) according to claim 1, having an inner face and an outer face in a state where the flip (16) is closed, and said plane antenna being provided on said outer face, further comprising:
a coupling antenna (26) provided on the inner face for receiving the radio signal from the plane antenna (18) by capacitive coupling and transferring the radio signal to the combiner.

3. The flip (16) according to claim 1, wherein a mass center of the plane antenna (18) is located further from the connector (20) than a center of the flip (16).

4. The flip (16) according to claim 1, wherein the plane antenna (18) is formed on the flip (16) by vacuum evaporation.

5. The flip (16) according to claim 1, further comprising a resonator element (24) which resonates with the plane antenna (18).

6. The flip (16) according to claim 5, the flip (16) having an inner face and an outer face in a state where the flip (16) is closed, wherein the resonator element (24) is provided on the inner face (24).

7. The flip (16) according to claim 6, wherein the resonator element (24) is provided in an area other than a region corresponding to the plane antenna (18) provided on the outer face (16).

8. The flip (16) according to claim 1, wherein the connector has a shaft (34), and wherein the combiner (28) has a first coil (L1) inserted in series between the microphone (22) and the shaft (34), a second coil (L2) inserted in series between the microphone (22) and a reference voltage of the cellular phone.

9. A cellular phone or portable computer comprising:
said flip (16) as claimed in claim 1;
said main body (14);
a main antenna (10) attached to the main body (14); and
a signal transfer unit (20) for transferring the radio signal from said plane antenna (18) to the main body (14).

10. The cellular phone or portable computer according to claim 9, said flip (16) having an inner face and an outer face in a state where the flip (16) is closed, and said plane antenna being provided on said outer face, further comprising:
a coupling antenna (26) provided on the inner face for receiving the radio signal from the plane antenna (18) by capacitive coupling and transferring the radio signal to the combiner.

11. The cellular phone or portable computer according to claim 10, wherein the coupling antenna (26) is formed at a position corresponding to the plane antenna (18).

12. The cellular phone or portable computer according to claim 11, wherein the coupling antenna (26) is formed on the flip (16) by vacuum evaporation.

13. The cellular phone or portable computer according to claim 9, wherein a mass center of the plane antenna (18) is located further from the main body (14) than a center of the flip (16) when the flip (16) is opened.

14. The cellular phone or portable computer according to claim 9, wherein the plane antenna (18) is formed on the flip (16) by vacuum evaporation.

15. The cellular phone or portable computer according to claim 9, wherein the flip (16) has a resonator element (24) which resonates with the plane antenna (18).

16. The cellular phone or portable computer according to claim 15, said flip (16) having an inner face and an outer face in a state where the flip (16) is closed, wherein the resonator element (24) is provided on the inner face.

17. The cellular phone or portable computer according to claim 15, wherein the resonator element (24) is provided in a area other than a region corresponding to the plane antenna (18) formed on the outer face.

18. The cellular phone or portable computer according to claim 9, wherein the signal transfer unit (20) has one or more hinges (20) for connecting the flip (16) to the main body (14) in a pivotable manner, each hinge comprising:
a shaft (34) for transmitting the radio signal from the plane antenna (18) to the main body (14); and
a transmission line for connecting the resonator element (24) to a ground of the main body (14) of the cellular phone.

19. The cellular phone or portable computer according to claim 9, wherein the signal transfer unit (20) has one or more hinges (20) for connecting the flip (16) to the main body (14) of the cellular phone in a pivotable manner, and wherein
each hinge (20) has a shaft (34) connected to the single signal line, and a brush (44) which contacts and rotates about the shaft (34).

20. The cellular phone or portable computer according to claim 19, wherein each hinge (20) has a pipe (32) surrounding the shaft (34), and the radio signal is transferred from the plane antenna (18) to the main body (14) via the shaft (34) and the pipe (32) based on a capacitive coupling between the shaft (34) and the pipe (32).

21. The cellular phone or portable computer according to claim 19, wherein the combiner (28) has a first coil (L1) inserted in series between the microphone (22) and the shaft (34), a second coil (L2) inserted in series between the microphone (22) and a reference voltage of the cellular phone.

22. The cellular phone or portable computer according to claim 9, further comprising a receiving circuit (80) for demodulating the radio signal, and a switch circuit (50) for switching an input to the receiving circuit between the main antenna (10) and the plane antenna (18) so as to allow only one of the radio signals received at the main antenna (10) and plane antenna (18) to be supplied to the receiving circuit (80).

## Patentansprüche

1. Flip bzw. Klappe (16) eines Zellulartelefons, welches Flip bzw. welche Klappe folgendes aufweist:
ein Anschlussstück (20) zum Verbinden des Flips (16) mit einem Hauptkörper (14) des Zellulartelefons auf eine Drehgelenkweise;
ein Aperturantenne (18) zum Empfangen eines Funksignals;
ein Mikrophon (22); und
einen Kombinierer (28) zum Kombinieren von Ausgaben von der Aperturantenn (18) und dem Mikrophon (22) in eine einzelne Signalleitung, die sich zum Anschlussstück (20) erstreckt.

2. Flip (16) nach Anspruch 1, mit einer Innenseite und einer Außenseite in einem Zustand, in welchem das Flip (16) geschlossen ist, wobei die Aperturantenne an der Außenseite vorgesehen ist, welches Flip weiterhin folgendes aufweist:
eine Kopplungsantenne (26), die an der Innenseite vorgesehen ist, zum Empfangen des Funksignals von der Aperturantenne (18) durch eine kapazitive Kopplung und zum Übertragen des Funksignals zum Kombinierer.

3. Flip (16) nach Anspruch 1, wobei ein Massenzentrum der Aperturantenne (18) weiter entfernt vom Anschlussstück (20) als von einem Zentrum des Flips (16) angeordnet ist.

4. Flip (16) nach Anspruch 1, wobei die Aperturantenne (18) am Flip (16) durch eine Vakuumverdampfung ausgebildet ist.

5. Flip (16) nach Anspruch 1, das weiterhin ein Resonatorelement (24) aufweist, das eine Resonanz mit der Aperturantenne (18) bildet.

6. Flip (16) nach Anspruch 5, wobei das Flip (16) eine Innenseite und eine Außenseite in einem Zustand hat, in welchem das Flip (16) geschlossen ist, wobei das Resonatorelement (24) an der Innenseite (24) vorgesehen ist.

7. Flip (16) nach Anspruch 6, wobei das Resonatorelement (24) in einem Bereich vorgesehen ist, der ein anderer als ein Bereich entsprechend der Aperturantenne (18) ist, die an der Außenseite (16) vorgesehen ist.

8. Flip (16) nach Anspruch 1, wobei das Anschlussstück eine Welle (34) hat, und wobei der Kombinierer (28) eine erste Spule (L1) hat, die zwischen dem Mikrophon (22) und der Welle (34) in Reihe geschaltet eingefügt ist, und eine zweite Spule (L2), die zwischen dem Mikrophon (22) und einer Referenzspannung des Zellulartelefons in Reihe geschaltet eingefügt ist.

9. Zellulartelefon oder tragbarer Computer, mit:
dem Flip bzw. der Klappe (16), wie es bzw. sie im Anspruch 1 beansprucht ist;
dem Hauptkörper (14);
einer Hauptantenne (10), die am Hauptkörper (14) angebracht ist; und
einer Signalübertragungseinheit (20) zum Übertragen des Funksignals von der Aperturantenne (18) zum Hauptkörper (14).

10. Zellulartelefon oder tragbarer Computer nach Anspruch 9, wobei das Flip (16) eine Innenseite und eine Außenseite in einem Zustand hat, in welchem das Flip (16) geschlossen ist, und wobei die Aperturantenne an der Außenseite vorgesehen ist, weiterhin mit:
einer Kopplungsantenne (26), die an der Innenseite vorgesehen ist, zum Empfangen des Funksignals von der Aperturantenne (18) durch eine kapazitive Kopplung und zum Übertragen des Funksignals zum Kombinierer.

11. Zellulartelefon oder tragbarer Computer nach Anspruch 10, wobei die Kopplungsantenne (26) bei einer Position entsprechend der Planarantenne (18) ausgebildet ist.

12. Zellulartelefon oder tragbarer Computer nach Anspruch 11, wobei die Kopplungsantenne (26) am Flip (16) durch Vakuumverdampfung ausgebildet ist.

13. Zellulartelefon oder tragbarer Computer nach Anspruch 9, wobei ein Massenzentrum der Aperturantenne (18) weiter entfernt vom Hauptkörper (14) als von einem Zentrum des Flips (16) angeordnet ist, wenn das Flip (16) geöffnet ist.

14. Zellulartelefon oder tragbarer Computer nach Anspruch 9, wobei die Aperturantenne (18) am Flip (16) durch eine Vakuumverdampfung ausgebildet ist.

15. Zellulartelefon oder tragbarer Computer nach Anspruch 9, wobei das Flip (16) ein Resonatorelement (24) hat, das eine Resonanz mit der Aperturantenne (18) bildet.

16. Zellulartelefon oder tragbarer Computer nach Anspruch 15, wobei das Flip (16) eine Innenseite und eine Außenseite in einen Zustand hat, in welchem das Flip (16) geschlossen ist, wobei das Resonatorelement (24) an der Innenseite vorgesehen ist.

17. Zellulartelefon oder tragbarer Computer nach Anspruch 15, wobei das Resonatorelement (24) in einem Bereich vorgesehen ist, der ein anderer als ein Bereich entsprechend der Aperturantenne (18) ist, die an der Außenseite ausgebildet ist.

18. Zellulartelefon oder tragbarer Computer nach Anspruch 9, wobei die Signalübertragungseinheit (20) eines oder mehrere Scharniergelenke (20) zum Verbinden des Flips (16) mit dem Hauptkörper (14) auf eine Drehgelenkweise hat, wobei jedes Scharniergelenk folgendes aufweist:
eine Welle (34) zum Übertragen bzw. Senden des Funksignals von der Aperturantenne (18) zum Hauptkörper (14); und
eine Sendeleitung zum Verbinden des Resonatorelements (24) mit einer Erdung des Hauptkörpers (14) des Zellulartelefons.

19. Zellulartelefon oder tragbarer Computer nach Anspruch 9, wobei die Signalübertragungseinheit (20) eines oder mehrere Scharniergelenke (20) zum Verbinden des Flips (16) mit dem Hauptkörper (14) des Zellulartelefons auf eine Drehgelenkweise hat, und wobei
jedes Scharniergelenk (20) eine Welle (34) hat, die mit der einzelnen Signalleitung verbunden ist, und eine Bürste (44), die die Welle (34) kontaktiert und sich um diese dreht.

20. Zellulartelefon oder tragbarer Computer nach Anspruch 19, wobei jedes Scharniergelenk (20) ein Rohr (32) hat, das die Welle (34) umgibt, und das Funksignal von der Aperturantenne (18) über die Welle (34) und das Rohr (32) basierend auf einer kapazitiven Kopplung zwischen der Welle (34) und dem Rohr (32) zum Hauptkörper (14) übertragen wird.

21. Zellulartelefon oder tragbarer Computer nach Anspruch 19, wobei der Kombinierer (28) eine erste Spule (L1) hat, die zwischen dem Mikrophon (22) und der Welle (34) in Reihe geschaltet eingefügt ist, und eine zweite Spule (L2), die zwischen dem Mikrophon (22) und einer Referenzspannung des Zellulartelefons in Reihe geschaltet eingefügt ist.

22. Zellulartelefon oder tragbarer Computer nach Anspruch 9, weiterhin mit einer Empfangsschaltung (80) zum Demodulieren des Funksignals und einer Umschaltschaltung (50) zum Umschalten einer Eingabe zur Empfangsschaltung zwischen der Hauptantenne (10) und der Aperturantenne (18), um zuzulassen, dass nur eines der Funksignale, die bei der Hauptantenne (10) und der Aperturantenne (18) empfangen werden, zur Empfangsschaltung (80) zugeführt wird.

## Revendications

1. Couvercle rabattable (16) d'un téléphone cellulaire, comportant :
un connecteur (20) destiné à connecter le couvercle rabattable (16) à un corps principal (14) du téléphone cellulaire d'une manière pivotante ;
une antenne plane (18) destinée à recevoir un signal radio ;
un microphone (22) ; et
un mélangeur (28) destiné à mélanger des signaux de sortie de l'antenne plane (18) et du microphone (22) en une ligne unique de signal qui s'étend jusqu'au connecteur (20).

2. Couvercle rabattable (16) selon la revendication 1, ayant une face intérieure et une face extérieure dans un état dans lequel le couvercle rabattable (16) est fermé, et ladite antenne plane étant située sur ladite face extérieure, comportant en outre :
une antenne de couplage (26) prévue sur la face intérieure pour recevoir le signal radio provenant de l'antenne plane (18) par un couplage capacitif et transférer le signal radio au mélangeur.

3. Couvercle rabattable (16) selon la revendication 1, dans lequel un centre de masse de l'antenne plane (18) est placé de façon à être plus éloigné du connecteur (20) qu'un centre du couvercle rabattable (16).

4. Couvercle rabattable (16) selon la revendication 1, dans lequel l'antenne plane (18) est formée sur le couvercle rabattable (16) par évaporation sous vide.

5. Couvercle rabattable (16) selon la revendication 1, comportant en outre un élément à résonateur (24) qui résonne avec l'antenne plane (18).

6. Couvercle rabattable (16) selon la revendication 5, le couvercle rabattable (16) ayant une face intérieure et une face extérieure dans un état dans lequel le couvercle rabattable (16) est fermé, dans lequel l'élément à résonateur (24) est prévu sur la face intérieure (24).

7. Couvercle rabattable (16) selon la revendication 6, dans lequel l'élément à résonateur (24) est situé dans une zone autre qu'une région correspondant à l'antenne plane (18) située sur la face extérieure (16).

8. Couvercle rabattable (16) selon la revendication 1, dans lequel le connecteur comporte un axe (34), et dans lequel le mélangeur (28) a une première bobine (L1) insérée en série entre le microphone (22) et l'axe (34), une seconde bobine (L2) insérée en série entre le microphone (22) et une tension de référence du téléphone cellulaire.

9. Téléphone cellulaire ou ordinateur portable comportant :
ledit couvercle rabattable (16) selon la revendication 1 ;
ledit corps principal (14) ;
une antenne principale (10) attachée au corps principal (14) ; et
une unité (20) de transfert de signal destinée à transférer le signal radio de ladite antenne plane (18) au corps principal (14).

10. Téléphone cellulaire ou ordinateur portable selon la revendication 9, ledit couvercle rabattable (16) ayant une face intérieure et une face extérieure dans un état dans lequel le couvercle rabattable (16) est fermé, et ladite antenne plane étant située sur ladite face extérieure, comportant en outre :
une antenne de couplage (26) située sur la face intérieure pour recevoir le signal radio provenant de l'antenne plane (18) par un couplage capacitif et pour transférer le signal radio au mélangeur.

11. Téléphone cellulaire ou ordinateur portable selon la revendication 10, dans lequel l'antenne de couplage (26) est formée dans une position correspondant à l'antenne plane (18).

12. Téléphone cellulaire ou ordinateur portable selon la revendication 11, dans lequel l'antenne de couplage (26) est formée sur le couvercle rabattable (16) par évaporation sous vide.

13. Téléphone cellulaire ou ordinateur portable selon la revendication 9, dans lequel le centre de masse de l'antenne plane (18) est plus éloigné du corps principal (14) qu'un centre du couvercle rabattable (16) lorsque le couvercle rabattable (16) est ouvert.

14. Téléphone cellulaire ou ordinateur portable selon la revendication 9, dans lequel l'antenne plane (18) est formée sur le couvercle rabattable (16) par évaporation sous vide.

15. Téléphone cellulaire ou ordinateur portable selon la revendication 9, dans lequel le couvercle rabattable (16) comporte un élément à résonateur (24) qui résonne avec l'antenne plane (18).

16. Téléphone cellulaire ou ordinateur portable selon la revendication 15, ledit couvercle rabattable (16) ayant une face intérieure et une face extérieure dans un état dans lequel le couvercle rabattable (16) est fermé, dans lequel l'élément à résonateur (24) est situé sur la face intérieure.

17. Téléphone cellulaire ou ordinateur portable selon la revendication 15, dans lequel l'élément à résonateur (24) est situé dans une zone autre qu'une région correspondant à l'antenne plane (18) formée sur la face extérieure.

18. Téléphone cellulaire ou ordinateur portable selon la revendication 9, dans lequel l'unité (20) de transfert de signal comporte une ou plusieurs charnières (20) pour connecter le couvercle rabattable (16) au corps principal (14) d'une manière pivotante, chaque charnière comportant :
un axe (34) pour la transmission du signal radio de l'antenne plane (18) au corps principal (14) ; et
une ligne de transmission pour connecter l'élément à résonateur (24) à une masse du corps principal (14) du téléphone cellulaire.

19. Téléphone cellulaire ou ordinateur portable selon la revendication 9, dans lequel l'unité (20) de transfert de signal comporte une ou plusieurs charnières (20) pour connecter le couvercle rabattable (16) au corps principal (14) du téléphone cellulaire d'une manière pivotante, et dans lequel
chaque charnière (20) comporte un axe (34) connecté à la ligne de signal unique, et une brosse (44) qui est en contact avec l'axe (34) et tourne autour de lui.

20. Téléphone cellulaire ou ordinateur portable selon la revendication 19, dans lequel chaque charnière (20) comporte un tube (32) autour de l'axe (34), et le signal radio est transféré de l'antenne plane (18) au corps principal (14) par l'intermédiaire de l'axe (34) et du tube (32) sur la base d'un couplage capacitif entre l'axe (34) et le tube (32).

21. Téléphone cellulaire ou ordinateur portable selon la revendication 19, dans lequel le mélangeur (28) comporte une première bobine (L1) insérée en série entre le microphone (22) et l'axe (34), et une seconde bobine (L2) insérée en série entre le microphone (22) et une tension de référence du téléphone cellulaire.

22. Téléphone cellulaire ou ordinateur portable selon la revendication 9, comportant en outre un circuit de réception (80) destiné à démoduler le signal radio, et un circuit de commutation (50) destiné à commuter une entrée vers le circuit de réception entre l'antenne principale (10) et l'antenne plane (18) afin de permettre à un seul des signaux radio reçus à l'antenne principale (10) et à l'antenne plane (18) d'être appliqué au circuit de réception (80).
